# FASCICULE DE BREVET EUROPEEN

(11) **EP 0 497 716 B1**
(45) Date de publication et mention de la délivrance du brevet: **17.04.1996**
(21) Numéro de dépôt: 92420036.3
(22) Date de dépôt: 31.01.1992
(51) Int. Cl.: E04H 4/12

(54) **Dispositif de nage à contre-courant et de filtration pour piscines notamment**
Gerät für Gegenstromschwimmen und Filtration, insbesonders für Schwimmbecken
Device for counter-current swimming and for filtering especially for swimmingpools

(30) Priorité: 31.01.1991 FR 9101394
(43) Date de publication de la demande: 05.08.1992
(73) Titulaire: PISCINES DESJOYAUX SA, F-42480 La Fouillouse (FR)
(72) Inventeur: Desjoyaux Jean Louis, F-42580 L'Etrat (FR); Desjoyaux Pierre Louis, F-42480 La Fouillouse (FR); Jandros Catherin, F-42580 L'Etrat (FR)
(74) Mandataire: Dupuis, François

(56) Documents cités:
- FR-A- 779 225
- FR-A- 2 365 014

## Description

Plus particulièrement, le dispositif s'applique aux blocs compacts présentant une partie immergée dans l'eau recevant les moyens de filtration et une partie située en dehors du bassin pour recevoir les différents organes électriques et les moyens de pompage. Ce bloc peut par exemple être du type de celui défini dans le brevet FR 8318248, dont le demandeur de la présente est titulaire.

On a proposé d'équiper ces blocs compacts d'un système apte à créer une nage à contre courant dont la fonction est de refouler l'eau dans le bassin de la piscine avec un débit relativement élevé. Ces systèmes sont également et avantageusement utilisés en hydrothérapie.

Pour obtenir ce résultat de circulation d'eau forcée, il est possible d'utiliser une pompe à fort débit de l'ordre de 40 à 50 m3/h. Cette solution n'est cependant pas satisfaisante car elle nécessite une pompe de conception coûteuse. En outre, le fonctionnement dit à nage à contre-courant est, dans ce cas, continu et constant, ce qui n'est pas nécessaire lorsque l'on veut seulement assurer la régénératin de l'eau de la piscine.

Pour remédier à ces inconvénients, on a proposé d'équiper le bloc d'une deuxième pompe montée en parallèle dont la tuyauterie de refoulement rejoint la tuyauterie de la pompe de circulation d'eau. Cet état de la technique peut être illustré par l'enseignement du brevet FR 8517201.

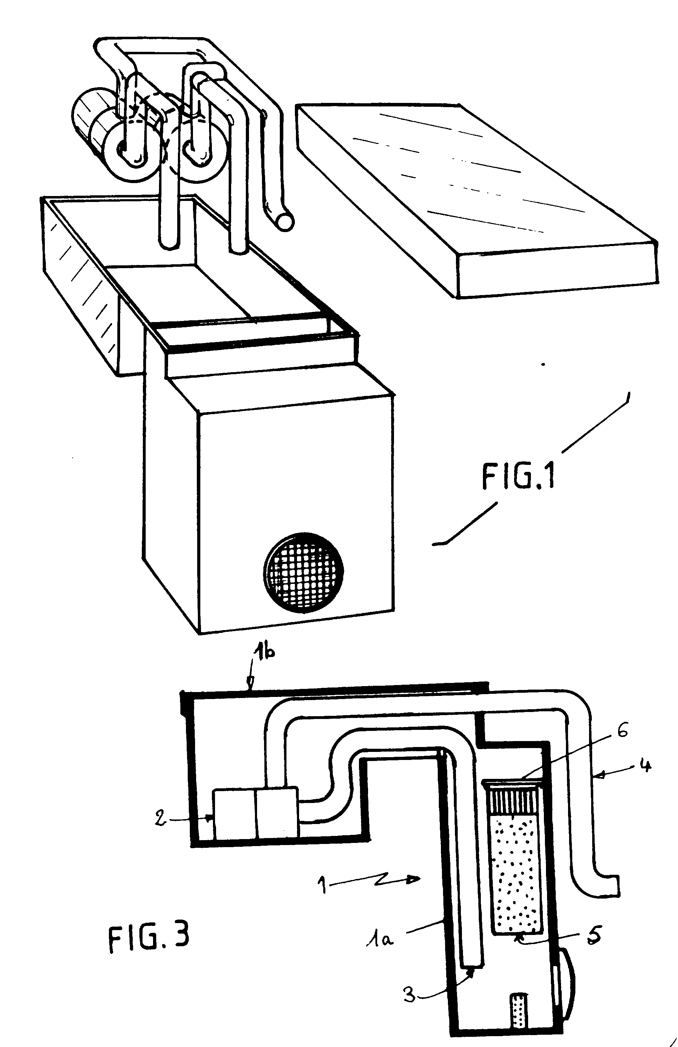

Il apparait donc nécessaire d'avoir deux pompes, d'ou un coût et un encombrement importants nécessitant une installation relativement complexe. On renvoie à la figure 1 qui montre un exemple de réalisation d'un bloc compact équipé de deux pompes et l'installation correspondante nécessaire pour obtenir les deux fonctionnements correspondant à une circulation d'eau normale et à une circulation d'eau forcée pour la nage à contre-courant.

Cette pompe à deux vitesses est montée dans un bloc filtrant, du type de celui décrit par le brevet FR 2554857.

L'invention s'est fixée pour but de remédier à ces inconvénients d'une manière particulièrement simple et efficace.

Le problème que se propose de résoudre l'invention est de simplifier au maximum l'installation à l'intérieur du bloc compact avec une grande souplesse de fonctionnement pour obtenir à volonté, soit la circulation et le renouvellement de l'eau d'une manière classique à un petit débit, soit à un débit plus élevé correspondant à la nage à contre-courant.

Pour résoudre ce problème, il a été conçu et mis au point, un dispositif de nage à contre-courant et de filtration pour piscine notamment, monté dans un bloc compact (1) présentant une partie (1a) immergée dans l'eau et une partie (1b) située en dehors du bassin,
- la partie (1a) immergée dans l'eau reçoit des moyens de filtration (5),
- la partie (1b) située en dehors du bassin est équipée d'une pompe à deux vitesses (2),
- la pompe à deux vitesses (2) est branchée, d'une part, à un tuyau d'aspiration (3) coopérant avec les moyens de filtration (5) et, d'autre part, à un tuyau de refoulement (4) de l'eau dans le bassin,
- la pompe (2) est assujettie à des moyens de commande, pour provoquer, à travers les moyens de filtration (5), la circulation de l'eau, soit à un faible débit avec une première vitesse, soit à un débit plus élevé correspondant à la nage à contre courant, avec une autre vitesse plus élevée et au travers du même tuyau de refoulement (4).

Le dispositif trouve une application particulièrement avantageuse dans le cas où les moyens de filtration sont exécutés à partir d'un article textile composé d'au moins une couche de matériau non tissé ayant des capacités de filtration, ledit article est conformé pour constituer une poche ou manchon ouvert à l'une de ses extrémités et fermé à son extrémité opposée, cet article étant monté à l'intérieur d'un support ouvert en communication avec le liquide et relié au système d'aspiration et de refoulement de la pompe.

L'invention est exposée, ci-après plus en détail à l'aide des dessins annexés, dans lesquels :

La figure 1 est une vue en perspective montrant un exemple de réalisation d'un bloc compact selon l'état de la technique, équipé de deux pompes pour assurer la circulation de l'eau et la nage à contre-courant.

La figure 2 est une vue en perspective du même bloc équipé du dispositif selon l'invention pour obtenir la circulation de l'eau ou la nage à contre-courant.

La figure 3 est une vue en coupe du bloc équipé du dispositif selon l'invention.

Comme indiqué, le dispositif est destiné à être monté à l'intérieur d'un bloc compact de filtration désigné dans son ensemble par (1). D'une manière connue, ce bloc comprend une partie (1a) immergée dans l'eau et une partie (1b) disposée à l'extérieur du bassin de la piscine. Par exemple, ce bloc peut avoir la forme d'un cavalier en U renversé, pour chevaucher le rebord du bassin de la piscine.

En outre, toujours de manière connue, la partie immergée dans l'eau (1a) reçoit des moyens de filtration (5), et peut présenter un projecteur, un escalier et autres accessoires.

Selon l'invention, la partie (1b) du bloc située en dehors du bassin, est équipée d'une pompe à deux vitesses (2). Cette pompe est notamment du type électrique et est assujettie à tout moyen de commande pour être entrainée à volonté, à une petite vitesse ou à une grande vitesse, en fonction du cycle de fonctionnement recherché, comme il sera indiqué dans la suite de la description.

Le moyen de commande de la pompe peut être disposé à un endroit quelconque, à proximité ou non du bloc (1), pour être accessible par l'utilisateur. Dans le cas où ce moyen de commande est disposé pour être accessible à partir du bassin, il est évident que ce dernier est exécuté pour présenter toute norme de sécurité électrique en vigueur.

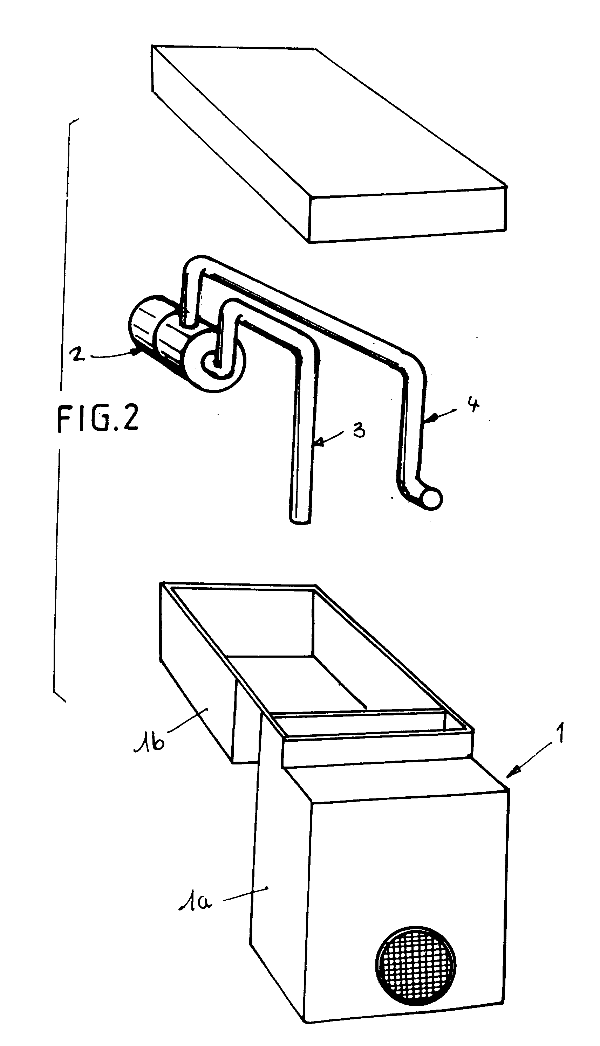

Suivant une autre caractéristique, la pompe à deux vitesses (2) est branchée sur des tuyaux d'aspiration (3) et de refoulement (4) disposés en combinaison avec les moyens de filtration (5). Notamment, comme le montrent les figures 2 et 3, la pompe (2) est branchée, d'une part, au tuyau d'aspiration (3) coopérant avec le moyen de filtration (5) et, d'autre part, au tuyau (4) apte à assurer le refoulement de l'eau dans le bassin.

Avantageusement, les moyens de filtration (5) sont exécutés à partir d'un article textile composé d'au moins une couche de matériau non tissé ayant des capacités de filtration. Cet article est conformé pour constituer une poche ou manchon (5) ouvert à l'une de ses extrémités et fermé à son autre extrémité. La poche (5) ainsi constituée est montée à l'intérieur d'un support (6) disposé à l'intérieur de la partie (1a) du bloc immergée dans l'eau. Ce support est en communication avec le liquide et relié au système d'aspiration et de refoulement de la pompe (2). Notamment, le tuyau d'aspiration (3) de la pompe, est disposé à l'intérieur de la partie (1b) du bloc pour être en communication avec le support (6) recevant la poche filtrante (5).

Il apparait donc, quelle que soit la vitesse de la pompe, que la circulation de l'eau se fait toujours au travers des moyens de filtration, que l'on soit en position normale de renouvellement de l'eau ou en position de nage à contre-courant.

A titre indicatif, la pompe est entrainée à une vitesse de 1450 tours/mn environ, correspondant à un débit de 23 m3/h. Cette vitesse et ce débit correspondent au cycle de renouvellement continu de l'eau.

Pour obtenir l'effet de nage à contre-courant, la pompe (2) est entrainée à une vitesse de l'ordre de 2800 tours/mn, ce qui correspond à un débit de 48 m3/h.

Les avantages ressortent bien de la description, en particulier on souligne et on rappelle la simplicité de l'installation par l'emploi d'une seule pompe assurant à volonté et d'une manière sélective, les deux fonctions de renouvellement de l'eau et de nage à contre-courant.

## Revendications

1. Dispositif de nage à contre-courant et de filtration pour piscine notamment, monté dans un bloc compact (1) présentant une partie (1a) immergée dans l'eau et une partie (1b) située en dehors du bassin,
- la partie (1a) immergée dans l'eau reçoit des moyens de filtration (5),
- la partie (1b) située en dehors du bassin est équipée d'une pompe à deux vitesses (2),
- la pompe à deux vitesses (2) est branchée, d'une part, à un tuyau d'aspiration (3) coopérant avec les moyens de filtration (5) et, d'autre part, à un tuyau de refoulement (4) de l'eau dans le bassin,
- la pompe (2) est assujettie à des moyens de commande, pour provoquer, à travers les moyens de filtration (5), la circulation de l'eau, soit à un faible débit avec une première vitesse, soit à un débit plus élevé correspondant à la nage à contre courant, avec une autre vitesse plus élevée et au travers du même tuyau de refoulement (4).

2. Dispositif selon la revendication1, caractérisé en ce que les moyens de filtration (5) sont exécutés à partir d'un article textile composé d'au moins une couche de matériau non tissé ayant des capacités de filtration, ledit article est conformé pour constituer une poche ou manchon ouvert à l'une de ses extrémités et fermé à son extrémité opposée, cet article (5) étant monté à l'intérieur d'un support (6) ouvert en communicaton avec le liquide et relié au système d'aspiration et de refoulement de la pompe (2).

## Patentansprüche

1. Vorrichtung zum Gegenstromschwimmen und Filtern, vor allem für Schwimmbäder, untergebracht in einem kompakten Blocks (1) mit einem Teil (1a), der ins Wasser eingetaucht ist, und einem Teil (1b) außerhalb des Beckens;
- der ins Wasser eingetauchte Teil (1a) enthält die Filtervorrichtungen (5),
- der außerhalb des Beckens liegende Teil (1b) ist mit einer Pumpe bestückt, die mit zwei Geschwindigkeiten arbeiten kann (2),
- die Zweigangpumpe (2) ist einerseits an einem Ansaugschlauch (3) angeschlossen, der mit den Filtereinrichtungen (5) zusammenwirkt, und andererseits an einem Schlauch (4), über den das Wasser in das Becken zurückgepumpt wird,
- die Pumpe (2) wird durch Steuervorrichtungen geregelt, um den Umlauf des Wassers über die Filtervorrichtungen (5) zu bewirken, entweder mit geringem Durchsatz bei einer ersten Geschwindigkeit oder mit einem höherem, dem Gegenstromschwimmen entsprechenden Durchsatz bei einer zweiten höheren Geschwindigkeit und über den gleichen Druckschlauch (4).

2. Vorrichtung nach Anspruch 1, dadurch gekennzeichnet, daß die Filtervorrichtungen (5) aus einem textilen Artikel bestehen, der mindestens eine Vliesstoffschicht mit Filtereigenschaften umfaßt; der textile Artikel ist so beschaffen, daß er an einem Ende eine Tasche bzw. eine Muffe bildet und am gegenüberliegenden Ende geschlossen ist, wobei der Artikel (5) im Innern eines offenen Trägerelements (6) sitzt, das mit der Flüssigkeit und mit dem Ansaug- und Fördersystem der Pumpe (2) in Verbindung steht.

## Claims

1. Countercurrent floating and filtration device for a swimming pool in particular, mounted in a compact unit (1) having one part (1a) immersed in the water and one part (1b) located outside the pool,
- part (1a) immersed in the water accommodates means of filtration (5),
- part (1b) located outside the pool is fitted with a 2-speed pump (2),
- the 2-speed pump (2) is connected, on the one hand, to a suction pipe (3) cooperating with the means of filtration (5) and, on the other hand, to a pipe that delivers (4) water into the pool,
- pump (2) is automatically controlled by means of control in order to obtain, through means of filtration (5), circulation of water, either at a low flow rate using a first speed or at a higher flow rate corresponding to countercurrent flotation using a higher speed through the same delivery pipe (4).

2. Device as claimed in claim 1 characterised in that the means of filtration (5) is made from a fabric object comprising at least one layer of nonwoven material having a filtering capability, said object being devised to constitute a pocket or sleeve having one of its ends open and its opposite end closed, this object (5) being mounted inside a support (6) that opens out into the liquid and is linked to the suction and delivery system of the pump (2).
